# FASCICULE DE BREVET EUROPEEN

(11) **EP 0 603 062 B1**
(45) Date de publication et mention de la délivrance du brevet: **05.03.1997**
(21) Numéro de dépôt: 93403025.5
(22) Date de dépôt: 14.12.1993
(51) Int. Cl.: G01N 3/06, G01B 11/16

(54) **Procédé et dispositif pour la mesure non destructive et en temps réel des propriétés mécaniques d'un matériau en feuille**
Verfahren und Vorrichtung zur nicht-zerstörenden Echtzeit-Messung mechanischer Eigenschaften eines Blattmaterials
Method and device for the non-destructive real time measurement of mechanical properties of a sheet material

(30) Priorité: 17.12.1992 FR 9215217
(43) Date de publication de la demande: 22.06.1994
(73) Titulaire: SMURFIT WORLDWIDE RESEARCH EUROPE, F-33405 Talence (FR)
(72) Inventeur: Huchon, Régnier, F-33400 Talence (FR); Poustis, Joel, F-33600 Pessac (FR)
(74) Mandataire: Muller, René

(56) Documents cités:
- WO-A-90/10194
- DE-A- 4 008 282
- US-A- 4 288 852
- JOURNAL OF APPLIED METALWORKING vol. 4, no. 2 , 1 Janvier 1986 pages 143 - 156 SCHEDIN ET AL. 'THE EVALUATION OF LARGE STRAINS,ETC.'
- NAVY TECHNICAL DISCLOSURE BULLETIN vol. 17, no. 2 , 1 Juin 1992 pages 24 - 25 FALLON 'METHOD OF APPLYING A DOT GRID PATTERN'

## Description

L'invention concerne un procédé et un dispositif pour la mesure en temps réel de caractéristiques mécaniques d'un matériau en feuille ou film, ainsi que l'application de ce procédé et ce dispositif en tant que moyen de contrôle dans une ligne de fabrication du matériau en feuille, en particulier en tant que moyen de contrôle pouvant le cas échéant influencer la conduite d'une machine à papier.

La détermination de caractéristiques mécaniques en temps réel est difficile à conduire en cours de production, notamment sur une machine à papier. Les méthodes de suivi et de contrôle connues offrent des temps de réponse de plusieurs dizaines de minutes et ne permettent pas de réaliser un asservissement optimum de la chaine de production. En cas de défauts de qualité, toute la production correspondant à ce temps de réponse est perdue et en outre la non prévision de ces défauts entraine une immobilisation de la chaine de production.

Des contrôles réalisés in situ et en temps réels ont déjà été proposés.

On connait ainsi des procédés ou méthodes mettant en oeuvre des techniques de mesures ultrasonores. Mais ces techniques se heurtent au problème de la nature hétérogène du matériau notamment du papier et ne permettent généralement d'atteindre que les propriétés d'élasticité de ces matériaux.

On connait encore l'utilisation de capteurs spécialisés qui procèdent par acquisition simultanée de déplacements dans le cas de capteur de proximité et/ou d'efforts sur une fraction du matériau dans le cas de capteurs de contact annulaires par exemple.

Ces procédés ou méthodes lorsqu'ils sont appliqués au papier et dont l'avantage est de pouvoir délivrer des informations en temps réel ne procèdent pourtant que par correlation des grandeurs mesurées aux caractéristiques attendues.

On a encore proposé des méthodes optiques. Ces méthodes non destructives offrent l'avantage d'avoir un minimum d'interaction avec la structure et d'éviter ainsi toute perturbation locale. De plus, dans la plupart des cas, il est possible de mesurer aussi bien la totalité du champ de déplacement que de pratiquer des mesures locales sur une base de petites dimensions. Elles permettent également les mesures dans les zones à gradient de déformation élevé, à fortes concentrations de contraintes ou dans les régions de propagation de fissures. Ces méthodes optiques sont utilisées aussi bien pour valider des résultats de calcul que pour observer des phénomènes de plasticité ou d'endommagement ou pour déterminer des lois de comportement de matériaux.

Ainsi, la méthode d'interférométrie holographique basée sur l'enregistrement des interférences produites par deux sources lumineuses issues du même objet avant et après déformation donne des franges d'interférences qui permettent d'accéder aux déplacements. Cette méthode possède une très bonne précision mais souffre d'un certain nombre de problèmes tels que la sensibilité aux vibrations, la mauvaise visibilité des franges ou une exploitation difficile.

Dans la méthode de granularité laser, le champ de granularité est obtenu en éclairant une surface rugueuse par un faisceau laser. C'est une figure formée de grains lumineux très contrastés et de forme quelconque. Tout mouvement de la surface provoque une modification du champ de granularité. La superposition de champs de granularité permet d'obtenir des franges d'interférences et par la suite le champ de déplacement.

Cette technique de mesure locale simple d'emploi et de bonne précision a toutefois l'inconvénient de ne pas particulariser les deux états et elle n'est pas adaptée à l'étude des grandes déformations.

Le phénomène du moiré est à l'origine d'un procédé d'extensométrie de caractère purement géométrique qui consiste à superposer deux réseaux de traits voisins. Il en résulte des franges d'égal déplacement. La comparaison d'un réseau déformé et d'un réseau non déformé permet de mesurer les déplacements dans le plan d'une pièce plane. Il est donc nécessaire de coller ou d'imprimer un réseau de traits sur la surface de l'objet, ce qui peut perturber les propriétés du matériau.

Le moiré interférométrique est une technique basée sur le même principe mais utilisant un réseau d'interférences comme réseau témoin. Elle possède une bonne résolution mais sa mise en oeuvre est plus délicate.

La technique de la stéréophotogramétrie est fondée sur l'enregistrement photographique de plusieurs aspects d'un objet. Un stéréocomparateur permet d'exploiter les parallaxes de déformations obtenu, c'est à dire le relief spatial ou temporel provoqué par la différence de prises de vue.

Cette méthode est utilisable pour toute sorte de déformations, mais elle est limitée par une exploitation lourde et un prix très élevé du comparateur.

Des techniques, dites méthodes des grilles, basées sur l'enregistrement direct de points ou de traits marqués sur la surface de l'éprouvette sont apparues depuis le développement de logiciels de traitement d'images.

On a ainsi par exemple proposé une méthode dont le i traitement est effectué à l'aide de transformée de Fourier mais qui nécessite le stockage intermédiaire des images et un traitement ultérieur assez long.

Toutes les méthodes énumérées ci-dessus sont partiellement non destructives et offrent l'avantage d'avoir un minimum d'interaction avec la structure afin d'éviter ainsi toute perturbation locale. De plus, elles permettent de pratiquer aussi bien des mesures sur l'ensemble de l'échantillon que des mesures locales.

Mais si elles sont séduisantes, elles présentent néanmoins un inconvénient majeur, celui d'être techniquement lourdes à mettre en oeuvre, avec des temps de traitement importants, ce qui finalement les rendent souvent peu compatibles avec une utilisation industrielle.

Le document DE-A-4 008 282 décrit un procédé pour déterminer le retrait ou la dilatation d'une bande de papier après qu'elle ait été soumise à un traitement de séchage par exemple. Le retrait ou la dilatation est déterminé par le repérage après traitement de la position de traits parallèles déposés avant le traitement. La détermination des variations de l'espace entre les traits déposés permet d'agir sur l'opération de traitement.

Le procédé décrit permet d'étudier les variations selon une direction, celle perpendiculaire à la direction de défilement de la bande de papier.

Le document Journal of Applied metalworking vol. 4, n° 2, 1er Janvier 1986 pages 143-156 concerne l'évolution des contraintes de surface dans une feuille de métal. La technique préconisée consiste à utiliser une grille et à analyser les déformations de la grille à l'aide d'images.

Le document WO 90/10194 décrit un procédé et un dispositif pour mesurer des contraintes sur une surface déformée, qui utilise deux images, sous deux angles différents, de la surface déformée.

L'invention obvie aux inconvénients cités.

L'invention propose un procédé pour mesurer les propriétés mécaniques telles que les propriétés d'élasticité et de résistance à la rupture d'une feuille de papier comprenant les opérations suivantes :
- on place des repères formés d'au moins trois points dans des positions déterminées les uns par rapport aux autres sur au moins une des deux surfaces de la feuille et/ou dans la feuille,
- on induit un changement d'état mécanique de la feuille,
- on saisit par images les variations de la position des repères, on traite les images des positions des repères à l'aide d'un logiciel de traitement d'images sélectionnant les images à traiter et à partir des images traitées, on détermine, avantageusement en temps réel, les caractéristiques mécaniques de la feuille de papier, à l'aide d'un logiciel de calcul de déformations qui sont liées aux caractéristiques mécaniques de la feuille de papier.

Les repères peuvent être constitués par tout élément repérable par un capteur adapté. Ce peuvent être des points réels tels des points d'encre qui avantageusement sont en encres spéciales pour pouvoir disparaître après avoir été repérés. Ils peuvent être constitués de figures géométriques.

Lorsque les repères sont limités à des points, il est nécessaire qu'ils soient au minimum au nombre de 3.

Le repérage peut s'effectuer en une seule fois ou au contraire en plusieurs fois, par exemple après chaque moyen de séchage lorsqu'il s'agit d'une feuille de papier.

Le changement d'état mécanique peut être induit par des efforts appliqués au matériau en feuille.

Lorsque le procédé s'applique à un substrat statique les efforts appliqués peuvent être des efforts de traction biaxale. Dans ce cas, on saisit les variations de la position des repères entre le moment où le substrat est soumis à ces efforts de traction et le moment précédant l'application de ces efforts.

Lorsque le procédé s'applique à un substrat défilant en continu, le changement d'état mécanique peut être induit par le passage du substrat entre une presse ou entre des rouleaux de calandrage par exemple. On saisit la variation de la position des repères suite au changement d'état mécanique, c'est-à-dire la variation des positions entre avant et après le changement d'état mécanique.

Le procédé selon l'invention peut se mettre en oeuvre à l'aide d'un dispositif formant une chaine de mesure et comprenant des moyens pour placer des repères sur le matériau en feuille dont on veut déterminer les caractéristiques mécaniques, des moyens pour induire un changement d'état mécanique du matériau, des moyens optiques pour saisir les images des variations de la position des repères, des moyens pour traiter les images précédentes, des moyens pour établir une corrélation entre les variations saisies et des variations connues, liées aux caractéristiques mécaniques du matériau.

Les moyens optiques pour saisir les images sont essentiellement au moins une caméra vidéo.

Les moyens pour traiter les images sont par exemple un ensemble formé par une carte particulière d'acquisition d'images par un calculateur et un logiciel effectuant un traitement d'images. Cet ensemble permet de sélectionner uniquement les informations intéressantes contenues dans l'image, et le traitement en temps réel de l'image perçue par la caméra à raison de plusieurs images par seconde, par exemple 25 images par seconde ou plus.

Le procédé et le dispositif selon l'invention permettent de déduire des caractéristiques mécaniques du matériau en temps réel.

Dans leur application à l'industrie papetière, ils permettent de contrôler de manière simple diverses grandeurs mécaniques du papier difficilement accessibles auparavant, telles que les modules d'élasticité, les propriétés de résistance à la rupture.

Ce procédé qui traite les déformations en surface du papier peut en induire leur détermination sur toute la largeur de la laize et permettre de prévenir l'apparition de défauts susceptibles de provoquer des casses au cours de production lorsque ce procédé est utilisé en tant que moyen de contrôle sur la machine à papier.

Ce procédé consistant à analyser à l'aide de la chaine de mesure décrite ci-dessus les déplacements de repère placés notamment en surface du matériau peut s'appliquer à tout produit en forme de film ou feuille nécessitant des techniques de contrôle non destructives.

D'autres avantages et caractéristiques de l'invention apparaitront dans la description suivante d'un exemple d'application du procédé de mesure en tant que moyen de contrôle placé sur une machine papetière.

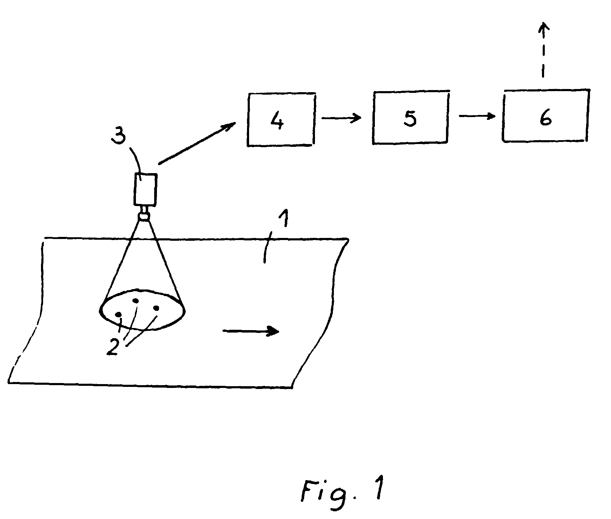

La figure 1 représente schématiquement le dispositif selon l'invention pour les mesures de propriétés mécaniques d'une feuille de papier défilant en continu.

Sur cette figure 1, la feuille continue de papier 1 qui défile à grande vitesse et dont on veut déterminer les caractéristiques mécaniques par l'analyse des déformations superficielles, est pourvue de repères 2, ici trois points dont on connait les positions respectives avant un changement d'état mécanique et dont on saisit les positions respectives à l'aide d'une caméra vidéo 3 après le changement d'état mécanique, à raison de 25 images par seconde et avec une précision de 0,5 % des positions, ces images étant traitées à l'aide d'une carte d'acquisition 4 sélectionnant les images à traiter et effectuant en temps réel un prétraitement de l'information et un micro-ordinateur 5 pourvu d'un logiciel de traitement d'images. Ces données sont transmises à un autre ordinateur 6 capable de déterminer par un calcul rapide les caractéristiques mécaniques du papier à partir des données précédentes. L'information peut être transmise (flèche en pointillés) au conducteur de la machine par exemple.

Ce calcul est basé sur la modélisation du comportement global du papier par des lois de l'orthotropie, tel que décrit par exemple dans la thèse de doctorat "Lois de comportement de matériaux hétérogènes anisotropes : mécanique de la rupture et de la fissuration appliquée à l'optimisation de la fabrication du papier" par Huchon R, thèse de l'Université de Bordeaux I, n° ordre 576 (1991), publication de Jones A.R. "An experimental investigation of the in-plane elastic modulus of paper". Tappi, vol 51 n° 5, pages 203-209 (1968) et dans la thèse de doctorat "Etude de la résistance à la fissuration d'un matériau hétérogène anisotrope appliquée à l'optimisation du processus de fabrication du papier" par Volozinskis X., thèse présentée à l'Université de Bordeaux I, n° d'ordre 267 (1988), et à partir desquelles l'homme de métier pourra tirer des enseignements nécessaires à la réalisation de l'invention.

Ainsi, par exemple, en plaçant la caméra vidéo 3 après une presse, on saisit les nouvelles positions respectives des trois points déposés auparavant. Les variations de position vont finalement permettre à l'aide de la chaîne de mesure de déterminer les caractéristiques mécaniques de la feuille de papier. Selon les résultats obtenus, le conducteur de la machine pourra intervenir le cas échéant sur les paramètres de fonctionnement de cette machine.

## Revendications

1. Procédé pour mesurer les propriétés mécaniques, notamment les propriétés d'élasticité et de résistance à la rupture d'une feuille de papier, caractérisé en ce qu'il comprend les opérations suivantes :
- on place des repères (2) formés d'au moins trois points dans des positions déterminées sur et/ou dans la feuille (1),
- on induit un changement d'état mécanique de la feuille (1),
- on saisit par images les variations de la position des repères à l'aide d'un logiciel de traitement d'images (3, 4, 5) sélectionnant les images à traiter,
- à partir des images traitées on détermine les caractéristiques mécaniques de la feuille de papier à l'aide d'un logiciel (5) de calcul de déformations qui sont liées aux caractéristiques mécaniques du papier (1).

2. Dispositif pour la mise en oeuvre du procédé selon la revendication 1, caractérisé en ce qu'il comprend des moyens (2) pour placer des repères sur la feuille de papier (1) dont on veut déterminer les caractéristiques mécaniques, des moyens induisant un changement d'état mécanique de la feuille de papier, des moyens optiquel (3) pour saisir les images des variations de la position des repères, des moyens (4) pour traiter les images précédentes et des moyens (5) pour établir une correlation entre les variations saisies et des variations connues, liées aux propriétés mécaniques de la feuille de papier (1).

3. Dispositif selon la revendication 2, caractérisé en ce que les moyens optiques pour saisir les images sont essentiellement au moins une caméra vidéo (3).

4. Dispositif selon une des revendications 2 ou 3, caractérisé en ce que les moyens pour traiter les images comprennent une carte particulière d'acquisition d'images (4) permettant de sélectionner uniquement les informations intéressantes, un microordinateur (5) et un logiciel de traitement d'images.

5. Application du procédé au contrôle en temps réel des propriétés mécaniques d'une bande de papier (1) continue sur la ligne de fabrication.

6. Application du procédé à la détermination des propriétés mécaniques d'un substrat papier statique.

## Patentansprüche

1. Verfahren zum Messen der mechanischen Eigenschaften, insbesondere der Elastizität und Reißfestigkeit einer Papierbahn, **dadurch gekennzeichnet**, daß es folgende Stufen umfaßt:
- Anbringen von aus mindestens drei Punkten gebildeten Markierungen (2) an festgelegten Stellen auf und/oder in der Papierbahn (1),
- Auslösen einer Veränderung des mechanischen Zustands der Papierbahn (1),
- Registrieren der Veränderungen der Lage der Markierungen durch Bilder mittels eines Rechenprogramms zur Bildverarbeitung (3, 4, 5), das die zu verarbeitenden Bilder auswählt, und
- Ermitteln der mechanischen Eigenschaften der Papierbahn aus den verarbeiteten Bildern mit Hilfe eines Rechenprogramms (5) für die Verformungen, die mit den mechanischen Eigenschaften des Papiers (1) verbunden sind.

2. Vorrichtung zur Durchführung des Verfahrens nach Anspruch 1, **dadurch gekennzeichnet**, daß sie Mittel (2) für das Anbringen der Markierungen auf der Papierbahn (1), deren mechanische Eigenschaften ermittelt werden sollen, Miltel, die eine Veränderung des mechanischen Zustands der Papierbahn auslösen, optische Mittel (3) zur Registrierung der Bilder der Veränderungen der Lage der Markierungen, Mittel (4) zur Verarbeitung der vorhergehenden Bilder und Mittel (5) zum Aufstellen einer Korrelation zwischen den registrierten Veränderungen und bekannten Veränderungen, die mit mechanischen Eigenschaften der Papierbahn (1) verbunden sind, umfaßt.

3. Vorrichtung nach Anspruch 2, **dadurch gekennzeichnet, daß** die optischen Mittel zur Registrierung der Bilder im wesentlichen mindestens eine Videokamera (3) sind.

4. Vorrichtung nach Anspruch 2 oder 3, **dadurch gekennzeichnet**, daß die Mittel zur Verarbeitung der Bilder eine spezielle Bilderfassungskarte (4), die es ermöglicht, nur die interessanten Informationen auszuwählen, einen Mikrorechner (5) und ein Rechenprogramm für die Bildverarbeitung umfassen.

5. Anwendung des Verfahrens auf die Prüfung der mechanischen Eigenschaften einer endlosen Papierbahn (1) in der Produktionslinie in Echtzeit.

6. Anwendung des Verfahrens auf die Ermittlung der mechanischen Eigenschaften eines statischen Papiersubstrates.

## Claims

1. Method of measuring the mechanical properties, notably the properties of elasticity and breaking strength, of a sheet of paper, characterized in that it comprises the following operations:
- reference marks (2), formed of at least three points, are placed in specific positions on and/or in the sheet (1),
- a change of mechanical state of the sheet (1) is induced,
- variations in the position of the reference marks are acquired by images, by means of an image processing software (3, 4, 5) choosing the images to be processed,
- from the images processed, the mechanical characteristics of the paper sheet are determined by means of a software (5) for calculating deformations which are linked to the mechanical characteristics of the paper (1).

2. Device for carrying out the method according to claim 1, characterized in that it comprises means (2) for placing reference marks on the paper sheet (1), the mechanical characteristics of which are to be determined, means inducing a change of mechanical state of the paper sheet, optical means (3) for acquiring the images of the variations in the position of the reference marks, means (4) for processing the foregoing images and means (5) for establishing a correlation between the acquired variations and known variations linked to the mechanical properties of the paper sheet (1).

3. Device according to claim 2, characterized in that the optical means for acquiring the images are essentially at least one video camera (3).

4. Device according to one of claims 2 or 3, characterized in that the means for processing the images comprise a special image acquisition card (4) enabling the information that is of interest to be uniquely selected, a micro-computer (5) and an image processing software.

5. Application of the method to the real time monitoring of the mechanical properties of a continuous web of paper (1) on the production line.

6. Application of the method to the determination of the mechanical properties of a static paper substrate.
